Europäisches Patentamt

European Patent Office

Office européen des brevets

(19)

(11) Veröffentlichungsnummer: **0 367 983**

**A2**

(12) # EUROPÄISCHE PATENTANMELDUNG

(21) Anmeldenummer: **89118304.8**

(22) Anmeldetag: **03.10.89**

(51) Int. Cl.5: **G01J 5/34, G01J 5/62**

(30) Priorität: **10.11.88 DE 3838123**

(43) Veröffentlichungstag der Anmeldung:
**16.05.90 Patentblatt 90/20**

(84) Benannte Vertragsstaaten:
**DE ES FR GB IT**

(71) Anmelder: **ROBERT BOSCH GMBH**
**Postfach 10 60 50**
**D-7000 Stuttgart 10(DE)**

(72) Erfinder: **Pientka, Rainer, Dipl.-Phys.**
**Eisenbahnstrasse 15**
**D-7580 Bühl(DE)**
Erfinder: **Pfetzer, Johannes**
**Rittersbachstrasse 49**
**D-7580 Bühl(DE)**

(54) **Wärmestrahlungssensor mit einem pyroelektrischen Aufnahmeelement.**

(57) Bei einem Strahlungssensor (11) wird die auf einem pyroelektrischen Sensor (16) einfallende elektromagnetische Strahlung (14) periodisch unterbrochen. Hierzu ist im Fuß (24) einer Umlenkeinrichtung (25) ein Anker (22) mit an den beiden Stirnseiten befestigten Permanentmagneten (23) angeordnet. Wird der Stromfluß in der Spule (19) periodisch geändert, so führt der Anker (22)eine entsprechende periodische Bewegung aus. Dadurch wird mit Hilfe eines Arms (26) an der Umlenkeinrichtung (25) der Strahlenfluß zum pyroelektrischen Sensor (16) unterbrochen, um so ein elektrisches Ausgangssignal zu erhalten. Der Sensor (11) baut besonders einfach und kann aus wenigen Bauteilen als Serienprodukt hergestellt werden.

FIG. 1

Xerox Copy Centre

EP 0 367 983 A2

## Wärmestrahlungssensor mit einem pyroelektrischen Aufnahmeelement

Stand der Technik

Die Erfindung geht aus von einem Wärmestrahlungssensor mit mindestens einem der Strahlung ausgesetzten pyroelektrischen Aufnahmeelement nach der Gattung des Anspruchs 1. Pyroelektrische Festkörper sind Dielektrika, die bei Abwesenheit äußerer mechanischer Kräfte oder elektrischer Felder ein permanentes Dipolmoment besitzen, dessen Betrag eine Funktion der Temperatur ist. Diese Polarisation wird allerdings unter normalen Umständen durch freie Oberflächenladungen verdeckt, so daß sich pyroelektrische Festkörper nach außen hin elektrisch neutral verhalten. Erst bei einer Temperaturänderung treten, infolge unvollständiger Kompensation des sich neu einstellenden Dipolmoments, elektrische Ladungen mit entgegengesetzten Vorzeichen an gegenüberliegenden Flächen des gepolten Dielektrikums in Erscheinung (pyroelektrischer Effekt). Die Polarisationsladung ist jedoch im allgemeinen nicht nachweisbar, da sie im Gleichgewichtszustand durch frei verschiebbare Ladungsträger kompensiert wird, die von außen auf die Begrenzungsflächen gelangen. Die polarisation, und damit auch die kompensierende frei verschiebbare Ladung, hängen von Temperatur ab. Ändert sich die Temperatur hinreichend schnell, kann die Zufuhr kompensierender Ladung dem Wechsel der Polarisationsladung nicht mehr nachkommen, und es entsteht an den ent sprechenden Flächen ein nachweisbarer Überschuß an frei verschiebbaren Ladungsträgern. Ein auf dem pyroelektrischen Effekt basierender Strahlungsdetektor liefert deshalb bei konstanter einfallender Strahlungsleistung (d.h. konstante Temperatur des Objekts) kein Signal; er spricht nur auf Änderungen der Strahlungsleistung an. In der Praxis wird dies mit Hilfe eines mechanischen Unterbrechers (Chopper) erreicht, der in den Strahlengang des Detektors positioniert wird. Hierzu wird z.B. in den Strahlengang eine Sektor-Chopperscheibe angeordnet, die von einem zusätzlichen Elektromotor angetrieben wird. Hierzu ist aber zusätzlicher Bauraum notwendig. Ferner benötigt die Scheibe viel Platz für die Rotation des Chopperblattes.

Vorteile der Erfindung

Der erfindungsgemäß Strahlungssensor mit den kennzeichnenden Merkmalen des Anspruchs 1 hat demgegenüber den Vorteil, daß er klein in der Bauweise (Größe) und relativ einfach herstellbar ist. Er ist aus wenigen Kunststoffspritzteilen aufgebaut, die in einfacher Weise gefertigt werden können. Der Strahlungssensor ist dadurch besonders für die Serienproduktion geeignet. Pyroelektrische Sensoren weisen eine hohe Empfindlichkeit auf, wodurch geringe Temperaturänderungen im Fahrgastraum erfaßt werden können, so daß eine genaue Klimaregelung möglich ist.

Durch die in den Unteransprüchen aufgeführten Maßnahmen sind vorteilhafte Weiterbildungen des im Anspruch 1 angegebenen Strahlungssensors möglich.

Zeichnung

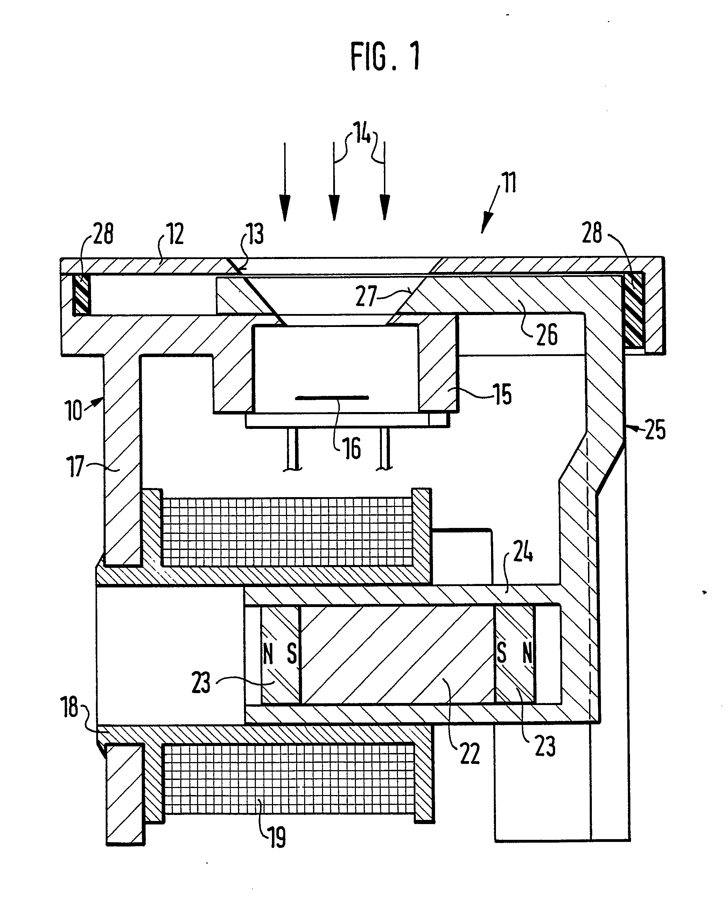

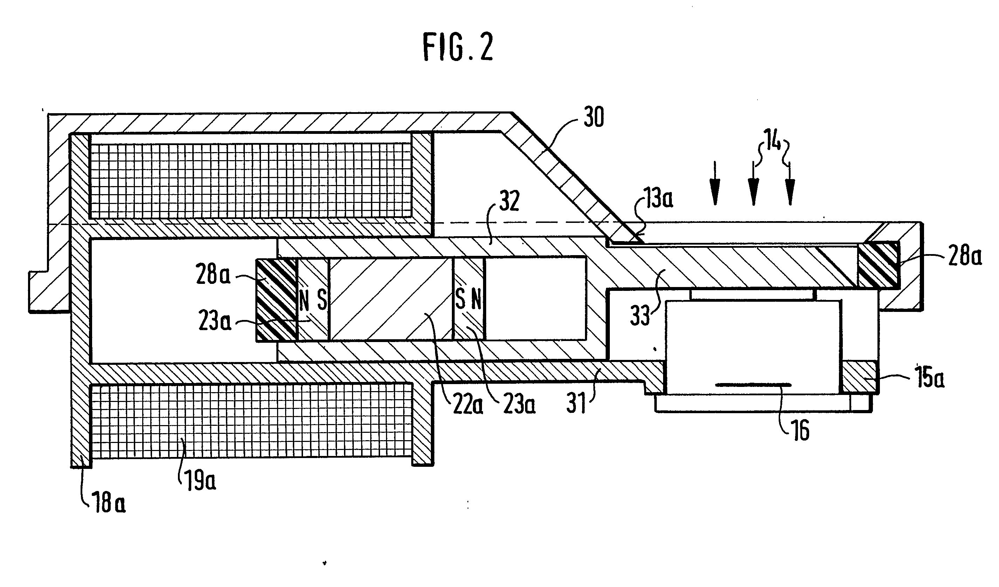

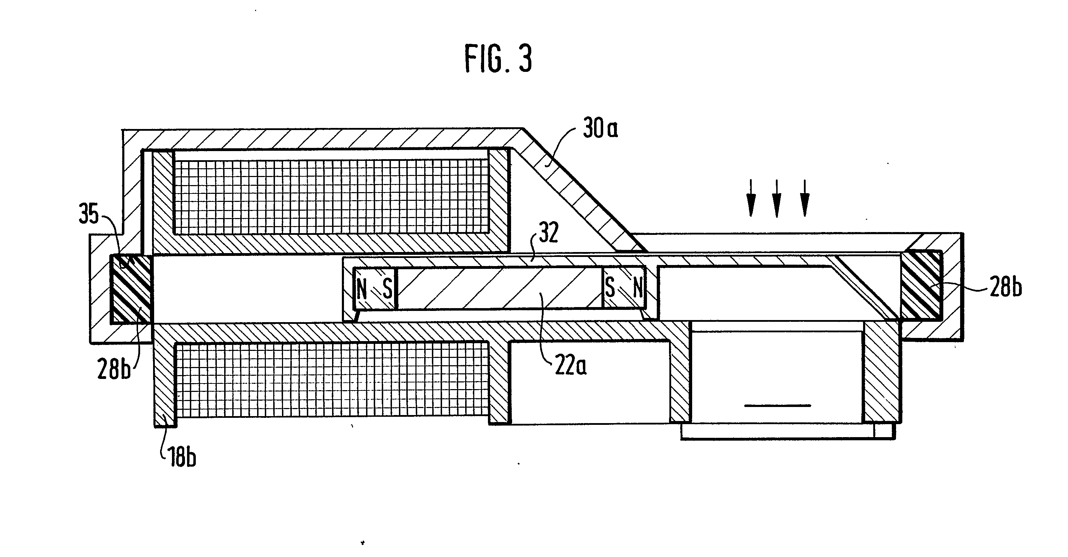

Ausführungsbeispiele der Erfindung sind in der Zeichnung dargestellt und in der nachfolgenden Beschreibung näher erläutert. Es zeigen Figur 1 einen Schnitt durch einen Strahlungssensor, die Figuren 2 und 3 je eine Abwandlung des Ausführungsbeispiels nach Figur 1.

Beschreibung der Ausführungsbeispiele

In Figur 1 ist mit 10 das Gehäuse eines Strahlungssensors 11 bezeichnet, das von einer Abdeckung 12 bedeckt ist. Diese weist eine Öffnung 13 auf, durch die eine elektromagnetische Strahlung 14, z.B. Sonnenstrahlung, auf einen in einem Abschnitt 15 des Gehäuses 10 angeordneten pyroelektrischen Sensor 16 auftreffen kann. In der Wandung 17 des Sensors 11 ist ein rohrförmiger Spulenkörper 18 angebracht, in dem sich eine Spule 19 befindet. Ferner wird in dem Spulenkörper 18 ein Anker 22 aus magnetisierbarem Material, wie z.B. Eisen, bewegt. Zu beiden Stirnseiten, des in Achsrichtung der Spule 19 angeordneten Ankers 22 befinden sich Permanentmagnete 23. Deren Polarität ist ebenfalls in Richtung der Spulenachse ausgerichtet und ist auf beiden Stirnseiten gleich. Der Anker 22 und die Permanentmagneten 23 sind im Fuß 24 einer Umlenkeinrichtung 25 fest angeordnet, der im Spulenkörper 18 gleitend geführt ist. Der etwa parallel zum Fuß 24 ausgebildete Arm 26 der Umlenkeinrichtung 25 wird zwischen dem Innengehäuse 15 und der Abdeckung 12 geführt. Ferner weist der Arm 26 eine Öffnung 27 auf, die denselben Öffnungswinkel wie die Öffnung 13 der Abdeckung 12 bzw. die Öffnung des Abschnitts 15 hat. Zwischen Abdeckung und Gehäuse 10 bzw. an der Abdeckung sind zwei Gummidämpfer 28 angeordnet, die die Bewegung des Arms 26 in der jeweiligen Endlage dämpfen.

Decken sich, wie in Figur 1 dargestellt, die Öffnungen 13, 27, so kann die Strahlung 14 auf den pyroelektrischen Sensor 16 fallen. Ferner wird die Spule 19 von einem Strom durchflossen, dessen Richtung periodisch mit Hilfe eines nicht dargestellten Wechselrichters bzw. periodischen Umschalters dauernd umgepolt wird. Das von der Spule 19 erzeugte Magnetfeld ändert dadurch dauernd seine Richtung, so daß der Anker 22 bzw. der Fuß 24 entlang der Spulenachse eine periodische, lineare Bewegung ausführt. Diese Bewegung wird mit Hilfe der Umlenkeinrichtung 25 auf dessen Arm 26 übertragen. Die Öffnung des Abschnitts 15 wird vom Arm 26 periodisch verschlossen und wieder geöffnet. Dadurch wird der Fluß der Strahlung 14 auf den Sensor 16 in einer bestimmten vorgegebenen Frequenz immer wieder unterbrochen, wodurch, wie oben beschrieben, ein elektrischer Stromfluß im Sensor 16 möglich ist. Die verwendeten Bauteile, Abdeckung 12, Gehäuse 10, Spulenkörper 18 und Umlenkeinrichtung 25 können in besonders einfacher Weise als Kunststoffspritzteile hergestellt werden. Der Strahlungssensor 11 kann in das Armaturenbrett eines Kraftfahrzeugs eingebaut werden, und der pyroelektrische Sensor 16 mit einer Klimaregelung für die Fahrgastzelle des Kraftfahrzeugs verbunden sein.

In der Ausbildung nach Figur 2 ist keine zusätzliche Umlenkeinrichtung für die Bewegung des Ankers notwendig. Hierzu ist im Gehäuse 30 ein Spulenkörper 18a mit einer Spule 19a angeordnet, so daß eine Bewegung des Ankers 22a direkt in Bewegungsrichtung des Verschlußteils möglich ist. Der Spulenkörper 18a weist eine Verlängerung 31 auf, auf der die Umfassung 32 des Ankers 22a und der Permanentmagnete 23a gleitet. Der pyroelektrische Sensor 16 ist in der Verlängerung 31 angeordnet. Die Umfassung 32 hat einen Arm 33, der zwischen der Innenseite des Gehäuses 30 und dem Sensor 16 geführt ist. Der Arm 33 verdeckt die Öffnung 13a im Gehäuse 30 für die Strahlung 14, so daß der Strahlengang zum pyroelektrischen Sensor 16 unterbrochen wird. Ferner ist wieder im Gehäuse 30 ein Gummianschlag 28a eingesetzt, um die Bewegung des Arms 33 zu dämpfen. Um ebenfalls die entgegengesetzte Bewegung des Arms 33 zu dämpfen, ist in die Umfassung 32 des Ankers 22a ein zweiter Gummianschlag 28a eingesetzt. Wird die Spule 19a weder von einem sich periodisch ändernden Strom durchflossen, so wird der Anker 22a periodisch hin- und herbewegt und die Öffnung 13a entsprechend geöffnet bzw. verschlossen.

Im Unterschied zur Ausbildung nach Figur 2 ist in der Figur 3 der Gummianschlag nicht in der Umfassung 32 des Ankers 22a, sondern in einer Auswölbung 35 des Gehäuses 30a angeordnet. Hierzu ist der Spulenkörper 18b, wie in der Figur 1, rohrförmig ausgebildet, so daß der Anker 22a mit seiner Umfassung 32 durch den Spulenkörper 18b bis zum Gummianschlag 28b gelangen kann.

## Ansprüche

1. Wärmestrahlungssensor (11) mit mindestens einem der Strahlung (14) ausgesetzten pyroelektrischen Aufnahmeelement (16), dessen Oberfläche mit Hilfe eines mechanischen Choppers periodisch abgedeckt wird, dadurch gekennzeichnet, daß der Chopper aus einem sich im Magnetfeld einer Spule (19) befindenden Anker (22) besteht, der mit einer den Strahlengang zum Aufnahmeelement (16) periodisch unterbrechenden Abdeckeinrichtung verbunden ist.

2. Sensor nach Anspruch 1, dadurch gekennzeichnet, daß die Stromrichtung des die Spule (19) durchfließenden Stroms periodisch umgepolt wird.

3. Sensor nach Anspruch 2, dadurch gekennzeichnet, daß an dem Anker (22) Permanentmagnete (23) angeordnet sind, deren Polung in Achsrichtung der Spule (19) ausgebildet ist.

4. Sensor nach einem der Ansprüche 1 bis 3, dadurch gekennzeichnet, daß das Gehäuse des Choppers aus Spritzteilen hergestellt ist.

5. Sensor nach einem der Ansprüche 1 bis 4, dadurch gekennzeichnet, daß sich am Ende des Bewegungsbereichs der Abdeckeinrichtung Gummistopper (23) befinden.

6. Sensor nach einem der Ansprüche bis 1 bis 5, dadurch gekennzeichnet, daß der Sensor (11) im Armaturenbrett eines Kraftfahrzeugs eingebaut ist und mit der Klimaanlage für die Fahrgastzelle des Kraftfahrzeugs verbunden ist.

EP 0 367 983 A2

# FIG. 1

FIG. 2

FIG. 3

35

30a

32

N S    S N

28b

22a

28b

18b

EP 0 367 983 A2